# EUROPEAN PATENT SPECIFICATION

(11) **EP 3 442 818 B1**
(45) Date of publication and mention of the grant of the patent: **07.06.2023**
(21) Application number: 17718868.7
(22) Date of filing: 13.04.2017
(51) Int. Cl.: B60K 6/365, B60K 6/48, B60K 6/52

(54) **A VEHICLE DRIVELINE SYSTEM**
FAHRZEUGANTRIEBSSTRANGSYSTEM
SYSTÈME DE TRANSMISSION DE VÉHICULE

(30) Priority: 15.04.2016 SE 1650508
(43) Date of publication of application: 20.02.2019
(73) Proprietor: BorgWarner Sweden AB, 261 24 Landskrona (SE)
(72) Inventor: NILSSON, Kristoffer, 22731 LUND (SE)
(74) Representative: Ström & Gulliksson AB
(86) International application number: PCT/EP2017/058952
(87) International publication number: WO 2017/178596

(56) References cited:
- EP-A1- 2 639 091
- EP-A2- 1 296 440
- WO-A1-2016/001394
- US-A1- 2007 034 428
- US-A1- 2015 224 867

## Description

### Technical Field

The present invention relates to a vehicle driveline system for a vehicle. More particularly, the present invention relates to a vehicle driveline system which may be adapted to selectively connect an electric motor to an input shaft for a differential.

### Background

The electrical power system of today's passenger cars is based on 12V. Due to the relatively low voltage proposed solutions for high electrical power utilities, such as electrically powered propulsion units, results in high currents which causes high losses and increased cable dimensions.

During recent years there is a trend of adding a 48V electrical power system to the already existing 12V system. As the electrical power increases new and improved solutions may be applicable, replacing the previous solutions requiring additional high power electronics.

One such example is the hybrid technology, i.e. the technology of adding electric drive to existing internal combustion engine drives, and allowing the vehicle to be driven either electrically, by the internal combustion engine, or both. The present applicant has previously presented several solutions for hybrid drive, e.g. as being described in WO2010101506 or in WO2012066035. These systems comprise a high power electrical motor for propulsion purposes, and a smaller electrical motor for torque vectoring purposes. Another example is described in WO2016/001394. Should 48V be available, it would be possible to develop a vehicle driveline system for a selectively all wheel drive vehicle using only a single electrical motor as well as a differential configured to selectively receive torque from the electrical motor, allowing selectable electric all wheel drive. US 2015/224867 A discloses a vehicle driveline system according to the preamble of claim 1.

### Summary

An object of the present invention is to provide a vehicle driveline system as defined by the features of claim 1, overcoming the drawbacks of the prior art systems. Particularly, an object of the present invention is to provide a vehicle driveline system which can be used for disconnect systems, i.e. systems wherein a part of the drivetrain is disconnected for reducing drag torque and excessive energy loss. For such systems the proposed solution may be used to accelerate the stationary part of the drivetrain when a mode change is requested from to accelerate the stationary part of the drivetrain when a mode change is requested from disconnect mode to connect mode. The present invention allows for a faster connection thereby allowing for improved performance even for more difficult and severe driving conditions, as well as it may reduce the usually extremely high requirements of the all wheel drive clutch in terms of fast response and torque accuracy.

According to another object it is possible to implement the proposed drive line systems in all wheel drive configurations having an all wheel drive clutch and a disconnect dog clutch, whereby these available clutches may be used to disconnect the electrical motor.

According to a first aspect a vehicle driveline system is provided. The system comprises a pinion configured to provide driving torque to a differential, and an electrical motor being connected to the pinion via a reduction gearing.

In an embodiment the electrical motor is arranged coaxially on said pinion. Further, the reduction gearing may comprise a planetary gear set.

The electrical motor may drive a sun wheel of said planetary gearing, wherein the pinion is connected to a planet carrier of said planetary gearing.

The vehicle driveline system may further comprise a coupling for selectively connecting the electrical motor to said reduction gearing.

In an embodiment the electrical motor is arranged radially offset said pinion.

The reduction gearing may comprise a gear train.

In an embodiment the vehicle driveline system further comprises a disc clutch being provided on the pinion.

According to a second aspect, an all wheel drive system for a vehicle is provided. The all wheel drive system comprises a first drivetrain being driven by an engine, a second drivetrain being selectively connected to the first drivetrain for providing all wheel drive, and an intermediate drivetrain being selectively disconnected from the first drivetrain and the second drivetrain when the vehicle is in two wheel drive mode, wherein said intermediate drivetrain comprises a vehicle driveline system according to any one of the claims 1-7.

The vehicle driveline system may be configured to accelerate the intermediate drivetrain when all wheel drive is requested by activating the electrical motor.

### Brief Description of Drawings

The invention will be described in further detail under reference to the accompanying drawings in which:
Fig. 1 is a schematic view of a vehicle driveline system according to an embodiment which does not form part of the invention.
Fig. 2 is a schematic view of a vehicle driveline system according to an embodiment which does not form part of the invention.
Fig. 3 is a schematic view of a vehicle driveline system according to an embodiment which does not form part of the invention.
Fig. 4 is a schematic view of a vehicle driveline system according to an embodiment which does not form part of the invention.
Fig. 5 is a schematic view of a vehicle driveline system according to an embodiment.

### Detailed Description

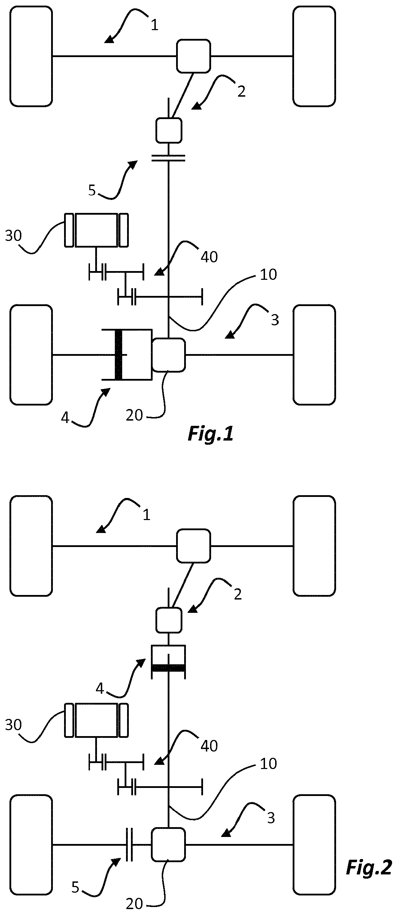

In Fig. 1 a vehicle driveline is shown utilizing a vehicle driveline system according to an embodiment which does not form part of the present invention. The vehicle driveline comprises a front axle 1 being driven by an engine (not shown), and a prop shaft 2 receiving driving torque from the engine. The prop shaft 2 connects with a rear axle 3 via a pinion 10 meshing with a rear differential 20. As can be seen in Fig. 1 the vehicle driveline allows for selective four wheel drive by means of an all wheel drive clutch 4 arranged in connection with the rear differential 20. Additionally a disconnect 5 is provided for reducing drag torque during two wheel drive.

The pinion 10 is also receiving selective driving torque from an electrical motor 30 longitudinally positioned in front of the rear axle 3. The electrical motor 30 is connected to the pinion 10 via a reduction gearing 40, in this embodiment being realized by a gear train having a plurality of meshing gears for reducing the rotational speed by a desired ratio. When the electrical motor 30 is running, which may be controlled based on predetermined driving criteria or on driver's input, driving torque will be added to the rear axle 3 for providing all wheel drive of the vehicle. Should the disconnect 5 and the all wheel drive clutch 4 be engaged, the electrical motor 30 will add driving torque to the already all wheel drive vehicle. The vehicle driveline system thus allows for mechanical all wheel drive, electrical all wheel drive, and a combination of mechanical and electrical all wheel drive. Further, as mentioned above, during disconnect mode the electrical motor 30 can be actuated to accelerate the stationary parts of the drivetrain for allowing for a more fast change to connect mode, i.e. all wheel drive mode. As a consequence, the existing dog clutch 5 and the all wheel drive clutch 4 can be controlled for disconnecting the electrical motor 30 from the drivetrain.

Now turning to Fig. 2 another embodiment of a vehicle driveline system is shown, being similar to the embodiment described with reference to Fig. 1 however here the position of the all wheel drive clutch 4 and the disconnect 5 has been switched. Accordingly, drive torque is transmitted to the pinion 10 from the engine via the all wheel drive clutch 4, while the disconnect 5 allows for a complete disconnection of the rear axle 4.

As for the previously described embodiment the electrical motor 30, being connected to the pinion 10, will allow for electrical all wheel drive of the vehicle driveline system, as well as acceleration of the disconnected parts for synchronization purposes.

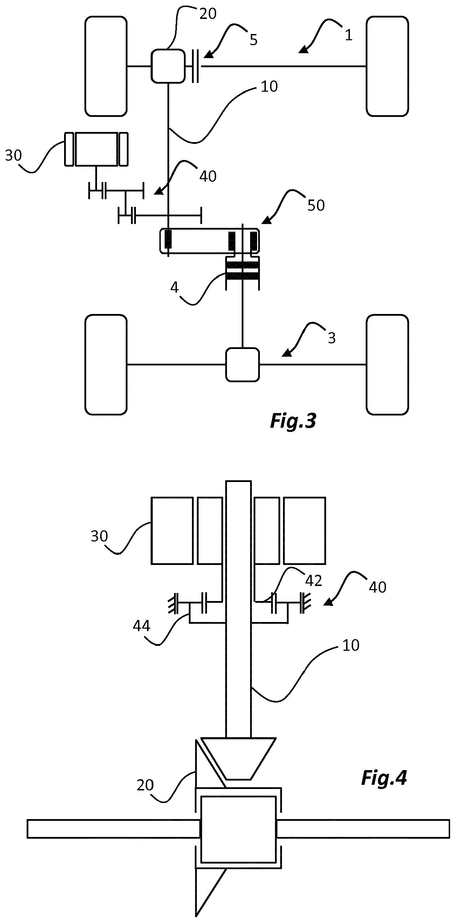

In Fig. 3 another alternative for a vehicle driveline system is shown, wherein the engine (not shown) drives the rear axle 3 for two wheel drive mode. A transfer case 50 is provided for selectively driving the front axle 3 via a pinion 10. For this the transfer case 50 is provided with an all wheel drive clutch 4, operated to distribute driving torque to the pinion 10 e.g. via a belt drive. Similarly to the previously described embodiments a disconnect 5 may be provided, here on the front axle 1.

The electrical motor 30 is connected to the pinion 10, i.e. the output shaft of the transfer case 50, via a reduction gear 40 being identical to the previous embodiments. Hence, the electrical motor 30 will allow for electrical all wheel drive, as well as a combination of mechanical and electrical all wheel drive in cases where the all wheel drive clutch 4 of the transfer case 50 is engaged.

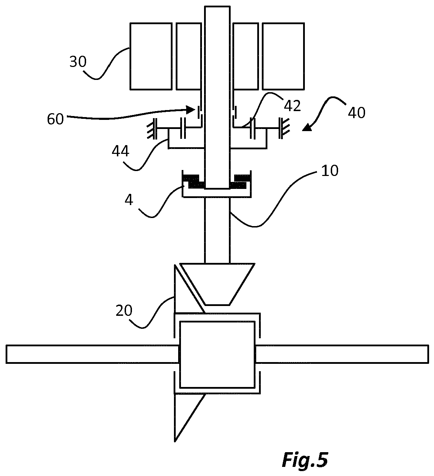

Other alternatives for connecting the electrical motor 30 to the pinion 10 are shown in Figs. 4 and 5. Starting in Fig. 4 the electrical motor 30 is arranged coaxially on said pinion 10, and the rotor of the electrical motor 30 is driving a sun gear 42 of a planetary gearing 40 forming the reduction gearing. The sun gear 42 forms a hollow shaft surrounding the pinion 10, and it meshes with a plurality of planets of a planet carrier 44. The planet carrier 44 forms an output shaft for the planetary gearing 40 and is connected to the pinion 10 for driving the pinion 10 and the downstream differential 20.The sun gear of the planetary gearing 40 may be locked.

In Fig. 5 an embodiment of the present invention is shown, wherein an all wheel drive clutch 4 is arranged on the pinion 10, longitudinally between the differential 20 and the position where the electrical motor 30 connects with the pinion 10. Further to this, the sun gear 42 is connected to the electrical motor 30 via a clutch 60, e.g. in the form of a shifting sleeve. This means that the electrical motor 30 is selectively connected to the pinion 10 via the clutch 60.

Although the vehicle driveline system has been mainly described with respect to all wheel drive systems it should be realized that the proposed driveline system could be implemented on a front axle or a rear axle.

Especially for an all wheel drive vehicle the drivetrain is divided in a first drivetrain corresponding to the drivetrain parts being permanently driven by the engine, a second drivetrain being selectively driven by the engine during all wheel drive, and an intermediate drivetrain connecting the first drivetrain to the second drivetrain in all wheel drive mode.

Referring to Fig. 1 the first drivetrain corresponds to the front axle 1 and the downstream propshaft 2. The second drivetrain corresponds to the rear axle, i.e. the rotating parts downstream the all wheel drive clutch 4. The intermediate drivetrain corresponds to the parts being arranged between the output of the disconnect clutch 5 and the input of the all wheel drive clutch 4. For this aspect the intermediate drivetrain is provided with the vehicle driveline system described above, i.e. the pinion 10 and the electrical motor 30 being connected to the pinion 10 via a reduction gearing 40. In this particular embodiment the vehicle driveline system is configured to accelerate the intermediate drivetrain when all wheel drive is requested by activating the electrical motor.

Although the present invention has been described above with reference to specific embodiments, it is not intended to be limited to the specific form set forth herein. Rather, the invention is limited only by the accompanying claims.

## Claims

1. A vehicle driveline system configured to form part of an all wheel drive system of a vehicle, said system comprising a pinion (10) configured to provide driving torque to a differential (20), and an electrical motor (30) being connected to the pinion (10) via a reduction gearing (40), **characterised in that**
the system further comprises an all wheel drive clutch (4) being provided on the pinion (10), longitudinally between the differential (20) and the position where the electrical motor (30) connects with the pinion (10).

2. The vehicle driveline system according to claim 1, wherein said electrical motor (30) is arranged coaxially on said pinion (10).

3. The vehicle driveline system according to claim 2, wherein said reduction gearing (40) comprises a planetary gear set.

4. The vehicle driveline system according to claim 3, wherein the electrical motor (30) drives a sun wheel (42) of said planetary gearing (40), and wherein the pinion (10) is connected to a planet carrier (44) of said planetary gearing (40).

5. The vehicle driveline system according to claim 3 or 4, further comprising a coupling (60) for selectively connecting the electrical motor (30) to said reduction gearing (40).

6. The vehicle driveline system according to claim 1, wherein said electrical motor (30) is arranged radially offset said pinion (30).

7. The vehicle driveline system according to claim 5, wherein said reduction gearing (40) comprises a gear train.

8. An all wheel drive system for a vehicle, comprising a first drivetrain being driven by an engine, a second drivetrain being selectively connected to the first drivetrain for providing all wheel drive, and an intermediate drivetrain being selectively disconnected from the first drivetrain and the second drivetrain when the vehicle is in two wheel drive mode, wherein said intermediate drivetrain comprises a vehicle driveline system according to any one of the preceding claims.

9. The all wheel drive system according to claim 8, wherein the vehicle driveline system is configured to accelerate the intermediate drivetrain when all wheel drive is requested by activating the electrical motor.

## Patentansprüche

1. Fahrzeug-Antriebsstrangsystem, das konfiguriert ist zum Bilden eines Teils eines Allradantriebssystems eines Fahrzeugs, wobei das System ein Ritzel (10) aufweist, das konfiguriert ist zum Liefern eines Antriebsdrehmoments an ein Differential (20), und einen Elektromotor (30), der über ein Untersetzungsgetriebe (40) mit dem Ritzel (10) verbunden ist, **dadurch gekennzeichnet, dass**
das System ferner eine Allrad-Antriebskupplung (4) aufweist, die an dem Ritzel (10) in Längsrichtung zwischen dem Differential (20) und der Position, an der der Elektromotor (30) mit dem Ritzel (10) verbunden ist, vorgesehen ist.

2. Fahrzeug-Antriebsstrangsystem nach Anspruch 1, wobei der Elektromotor (30) koaxial zum Ritzel (10) angeordnet ist.

3. Fahrzeug-Antriebsstrangsystem nach Anspruch 2, wobei das Untersetzungsgetriebe (40) einen Planetenradsatz aufweist.

4. Fahrzeug-Antriebsstrangsystem nach Anspruch 3, wobei der Elektromotor (30) ein Sonnenrad (42) des Planetengetriebes (40) antreibt, und wobei das Ritzel (10) mit einem Planetenträger (44) des Planetengetriebes (40) verbunden ist.

5. Fahrzeug-Antriebsstrangsystem nach Anspruch 3 oder 4, ferner aufweisend eine Kupplung (60) zum selektiven Verbinden des Elektromotors (30) mit dem Untersetzungsgetriebe (40).

6. Fahrzeug-Antriebsstrangsystem nach Anspruch 1, wobei der Elektromotor (30) radial versetzt zum Ritzel (30) angeordnet ist.

7. Fahrzeug-Antriebsstrangsystem nach Anspruch 5, wobei das Untersetzungsgetriebe (40) ein Zahnradgetriebe aufweist.

8. Allrad-Antriebssystem für ein Fahrzeug, aufweisend einen ersten Antriebsstrang, der von einem Motor angetrieben wird, einen zweiten Antriebsstrang, der selektiv mit dem ersten Antriebsstrang verbunden ist, um einen Allradantrieb bereitzustellen, und einen Zwischen-Antriebsstrang, der selektiv von dem ersten Antriebsstrang und dem zweiten Antriebsstrang getrennt wird, wenn das Fahrzeug im Zweirad-Antriebsmodus ist, wobei der Zwischen-Antriebsstrang ein Fahrzeug-Antriebsstrangsystem nach einem der vorhergehenden Ansprüche aufweist.

9. Allrad-Antriebssystem nach Anspruch 8, wobei das Fahrzeug-Antriebsstrangsystem konfiguriert ist zum Beschleunigen des Zwischen-Antriebsstrang, wenn der Allradantrieb durch Aktivieren des Elektromotors angefordert wird.

## Revendications

1. Système de ligne d'arbres de transmission de véhicule conçu pour faire partie d'un système de traction intégrale d'un véhicule, ledit système comprenant un pignon (10) conçu pour fournir un couple d'entraînement à un différentiel (20), et un moteur électrique (30) étant en prise avec le pignon (10) par le biais d'un engrenage de réduction (40), **caractérisé en ce que** le système comprend en outre un embrayage de traction intégrale (4) disposé sur le pignon (10), longitudinalement entre le différentiel (20) et la position au niveau de laquelle le moteur électrique (30) est en prise avec le pignon (10).

2. Système de ligne d'arbres de transmission de véhicule selon la revendication 1, dans lequel ledit moteur électrique (30) est disposé coaxialement sur ledit pignon (10) .

3. Système de ligne d'arbres de transmission de véhicule selon la revendication 2, dans lequel ledit engrenage de réduction (40) comprend un train planétaire.

4. Système de ligne d'arbres de transmission de véhicule selon la revendication 3, dans lequel le moteur électrique (30) entraîne une roue solaire (42) dudit train planétaire (40), et dans lequel le pignon (10) est en prise avec un porte-satellites (44) dudit train planétaire (40).

5. Système de ligne d'arbres de transmission de véhicule selon la revendication 3 ou la revendication 4, comprenant en outre un accouplement (60) destiné à mettre sélectivement en prise le moteur électrique (30) avec ledit engrenage de réduction (40).

6. Système de ligne d'arbres de transmission de véhicule selon la revendication 1, dans lequel ledit moteur électrique (30) est disposé décalé radialement dudit pignon (30) .

7. Système de ligne d'arbres de transmission de véhicule selon la revendication 5, dans lequel ledit engrenage de réduction (40) comprend un train d'engrenages.

8. Système de traction intégrale destiné à un véhicule, comprenant un premier train de transmission qui est entraîné par un moteur, un second train de transmission étant sélectivement en prise avec le premier train de transmission pour établir une traction intégrale, et un train de transmission intermédiaire étant sélectivement désaccouplé du premier train de transmission et du second train de transmission lorsque le véhicule est dans un mode à deux roues motrices, dans lequel ledit train de transmission intermédiaire comprend un système de ligne d'arbres de transmission de véhicule selon l'une quelconque des revendications précédentes.

9. Système de traction intégrale selon la revendication 8, dans lequel le système de ligne d'arbres de transmission de véhicule est conçu pour accélérer le train de transmission intermédiaire lors d'une demande de traction intégrale par une activation du moteur électrique.
